(19) Europäisches Patentamt
European Patent Office
Office européen des brevets

(11) **EP 2 631 476 B1**

(12) **EUROPÄISCHE PATENTSCHRIFT**

(45) Veröffentlichungstag und Bekanntmachung des Hinweises auf die Patenterteilung:
**23.08.2017 Patentblatt 2017/34**

(51) Int Cl.:
*F03D 80/00* (2016.01)    *F03D 17/00* (2016.01)

(21) Anmeldenummer: **13156541.8**

(22) Anmeldetag: **25.02.2013**

(54) **Verfahren zur Überprüfung des baulichen Zustands von Windkraftanlagen**

Method for testing the structural condition of wind power plants

Procédé de vérification de l'état de construction d'éoliennes

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2012 DE 102012003513**

(43) Veröffentlichungstag der Anmeldung:
**28.08.2013 Patentblatt 2013/35**

(73) Patentinhaber: **HGZ Patentvermarktungs GmbH**
**45481 Mühlheim (DE)**

(72) Erfinder: **Zell, Horst**
**45481 Mühlheim (DE)**

(74) Vertreter: **Sparing Röhl Henseler**
**Postfach 14 04 43**
**40074 Düsseldorf (DE)**

(56) Entgegenhaltungen:
**DE-A1-102005 034 131    DE-A1-102010 048 400**

- **MEINLSCHMIDT P ET AL: "Thermographic inspection of rotor blades", INTERNET CITATION, 26. September 2006 (2006-09-26), Seiten 1-9, XP002525987, ISSN: 1435-4934 Gefunden im Internet: URL:http://www.ndt.net/article/ecndt2006/doc/Tu.1.5.3.pdf [gefunden am 2009-04-29]**

EP 2 631 476 B1

**Beschreibung**

Die Erfindung betrifft ein Verfahren zur Überprüfung des baulichen Zustands von Windkraftanlagen in Form von mehrere Rotorblätter aufweisenden Windrädern, wobei Teile die Windkraftanlagen, insbesondere deren Rotorblätter, von einer oder mehreren an und/oder in einem Luftfahrzeug installierten thermografischen Aufnahmeeinrichtungen erfasst werden.

Im Zuge der wachsenden Bedeutung regenerativer Energien werden in den vergangenen Jahren international verstärkt Windkraftanlagen gebaut. Wegen der oberhalb von Gewässern, insbesondere der Meere herrschenden starken Winde werden auch mehr und mehr Offshore-Windkraftanlagen gebaut. Die Windkraftanlagen müssen, wie andere Industrieanlagen auch, in regelmäßigen Intervallen gewartet werden. Dies gilt für Windkraftanlagen umso mehr, da sie hohen dynamischen Belastungen ausgesetzt sind. Überprüfungen des baulichen Zustands vor allem der Rotorblätter müssen daher in vergleichsweise kurzen Abständen veranlasst werden.

Diese Inspektionen sind speziell bei Offshore-Windkraftanlagen auf dem Seeweg sehr problematisch, weil das Personal per Boot zu dem jeweiligen Windrad gelangen muss. Die Inspektionsarbeiten werden häufig von Industriekletterern ausgeführt. Voraussetzung für diese Inspektionen ist außerdem, dass sich das jeweilige Rotorblatt zumindest annähernd in der Sechsuhrstellung befindet. Ist die Überprüfung des ersten Rotorblattes abgeschlossen, muss das Windrad gedreht und das als nächstes zu überprüfende Rotorblatt in die Sechsuhrstellung gebracht werden. Dass dies mit einigem Aufwand zusammenhängt, liegt auf der Hand.

Aus der WO 2011/113402 A1 sind ein Verfahren und eine Vorrichtung zu Überprüfung des baulichen Zustands von Windkraftanlagen in Form von mehrere Rotorblätter aufweisenden Windrädern bekannt. Dabei kommen Luftfahrzeuge, in der Regel Hubschrauber, zum Einsatz. Diese verfügen über geeignete Aufnahmeeinrichtungen zum Beispiel in der Form von Wärmbildkameras an Bord, über welche die für die Inspektion notwendigen Daten erfasst werden. Die Ergebnisse, die die Wärmebilder liefern, sind allerdings in großen Maße von der Temperaturunterschieden innerhalb des Windrades abhängig, da der Bildkontrast durch die Temperaturunterschiede definiert wird. Ist ein erforderlicher Temperaturunterschied nicht vorhanden, so verfügen die erzeugten Wärmebilder nicht über einen für die Auswertung notwendigen Kontrast. Insofern werden eine Vielzahl von Wärmebildern aufgenommen, die keinen Rückschluss auf Beschädigungen liefern, obwohl Beschädigungen vorhanden sind. Es wird zum Herstellen solcher Aufnahmen ein zum Teil ein großer Aufwand betrieben, der zu einem beträchtlichen Anteil zu nutzlosen Wärmebildern führt.

In der Veröffentlichung "Thermographic Inspection of Rotor Blades", Peter Meinlschmidt, Jochen Aderhold, wird beschrieben, dass Hitzeeinwirkungen durch die Sonne die Rotorblätter erwärmen und so Temperaturunterschiede im Rotorblatt erzeugen. Die Strahleneinwirkung der Rotorblätter erwärmt das Rotorblatt aber ungleichmäßig, z.B. bedingt durch unterschiedliche Auftreffwinkel der Sonnenstrahlen auf der Oberfläche des Rotorblattes. Es ergeben sich folglich aufgrund der Sonneneinstrahlung Unregelmäßigkeiten im Temperaturgefüge des Rotorblattes, welche die Ergebnisse der Untersuchung drastisch verschlechtern.

Insofern ist es Aufgabe der vorliegenden Erfindung, die Untersuchung der Windkraftanlagen mittels einer an einem Luftfahrzeug montierten Wärmebildkamera, zu erhöhen. Diese Aufgabe wird gelöst durch ein Verfahren nach Anspruch 1; bevorzugte Ausgestaltungen ergeben sich aus den Unteransprüchen. Die Vorrichtungen nach den Ansprüchen 14 und 15 unterstützen das Verfahren.

Der Kern der Erfindung liegt insbesondere darin, dass zunächst eine Prognose darüber erzeugt wird, ob in der Zukunft, nämlich insbesondere in einem Zeitraum, der in etwa 30 Minuten bis wenige Stunden nach dem Prognosezeitpunkt liegen kann, die erforderlichen thermischen Rahmenbedingungen am Rotorblatt vorliegen, die es erst ermöglichen, dass anhand eines aufzunehmende Wärmebilds Rückschlüsse auf mögliche Beschädigungen am Rotorblatt gezogen werden. Erst dann, wenn eine solche Prognose positiv ist, können die doch recht aufwendigen Vorbereitungen zum Starten des Helikopters oder eines anderen Luftfahrzeugs getroffen werden. Es kann nun mit einigermaßen großer Sicherheit davon ausgegangen werden, dass ein teilweise doch recht aufwändiger Flug bis zu einer Offshore-Anlage erfolgreich ist. Das Riskio, dass unnötige Flüge durchgeführt würden, lässt sich durch eine solche Prognose deutlich reduzieren. Es wird also zunächst überprüft, ob mit einer ausreichenden Temperaturdifferenz gerechnet werden kann. Anschließend wird der Flug mitsamt der Messeinrichtung zur Windkraftanklage vorgenommen. Sobald das Luftfahrzeug dann mitsamt der Messeinrichtung in Position an der Windkraftanlage ist, werden die erforderlichen Messungen durchgeführt, was insbesondere heißt, dass Wärmebilder mit einer Wärmebildkamera aufgenommen werden.

Für die Prognose können Sensorwerte verwendet werden, die Umwelteinflüsse aufnehmen und in elektronisch verarbeitbare Umwelteinflusswerte umwandeln können. Als Umwelteinflüsse können insbesondere die Umgebungstemperatur sowie Sonneneinstrahlintensität oder auch Kenngrößen über Niederschläge herangezogen werden. Diese Umweltgrößen können dann einer Datenverarbeitungseinheit zugeführt werden, die den Messzeitraum ermittelt. Für die Prognose können auch die aktuellen Temperaturen am innenliegenden Bereich und am angrenzenden außen liegenden Bereich mittels Sensoren ermitteln werden. Unter Berücksichtigung der aktuellen Umgebungstemperatur oder anderer Einflussgrößen kann dann ermittelt werden, wie sich die Temperaturen am innenliegenden beziehungsweise am außenliegenden Bereich ändern werden. Neben den aktuellen Temperaturen können auch historische Werte über die Temperaturen verwendet werden.

Bevorzugt kann anhand von Temperaturverläufen, nämlich insbesondere der Umgebungstemperatur und der Temperaturen der innen- und außenliegenden Bereiche, der vergangenen 6 bis 12 Stunden eine Extrapolation der Temperaturen der innen- und außen liegenden Bereichen in die Zukunft vorgenommen werden. Anhand dieser Extrapolation kann dann auf die Temperaturen der innen- und außen liegenden Bereiche in der nahen Zukunft geschlossen werden. Hieraus lässt sich dann wiederum die Temperaturdifferenz errechnen. Sollte zu einem bestimmten Zeitpunkt eine Temperaturdifferenz größer der erforderlichen Mindesttemperaturdifferenz prognostiziert werden, so ist dieser Zeitpunkt Bestandteil des Messzeitraums. Mehrere solcher Zeitpunkte definieren dann den Messzeitraum

Für die Extrapolation der Temperaturen am innen- und außenliegenden Bereich können thermische Modelle der zu untersuchenden Teile der Windkraftanlage herangezogen werden. Werden solche thermischen Modelle beispielsweise mit einer fiktiven Umgebungstemperatur oder einem fiktiven Sonneneinstrahlungswert beaufschlagt, so lässt sich errechnen, wie sich die unterschiedlichen Bereiche innerhalb der nächsten Zeit thermisch verändern werden, also ob und ggf. wie sich diese in den nächsten Stunden erwärmen bzw. abkühlen werden.

Hierbei kommt insbesondere die Lockin-Thermografie zur Anwendung kommen. Als Periodenlänge setzt man den Tag-Nachtrhythmus ein. Bei einer typischen Temperaturdifferenz zwischen innenliegendem Bereich und außenliegendem Bereich von etwa 5°C lassen sich brauchbare Aufnahmen erzielen. Bei einer Wärmeleitfähigkeit des Verbundwerkstoffs von etwa 0,8 J/KGK einer Wärmekapazität von 1200 J-KG und einer Dichte von etwa 2100 KG/M$^3$ resultiert aus theoretischen Berechnungen eine thermische Eindringtiefe von ca. 9 cm bei Amplitudenbetrachtung und ca. 18 cm bei Phasenbetrachtungen.

In einer bevorzugten Ausgestaltung des erfindungsgemäßen Verfahrens ist vorgesehen, dass innerhalb des ersten Verfahrensschrittes ein Verlauf der Umgebungstemperatur im Bereich der Windkraftanlage analysiert wird, anhand dessen die Temperaturdifferenz für einen Zeitpunkt in der Zukunft ermittelt wird. Der Verlauf der Umgebungstemperatur kann sowohl historische Umgangstemperaturen als auch Prognosen der Umgebungstemperaturen für die Zukunft erfassen. Solche Verläufe sind über Wetterdienste abrufbar oder können auch über eigene, an der Windkraftanlage angebrachte Sensoren zur Verfügung gestellt werden.

Anhand der Verläufe der Umgebungstemperatur und des thermischen Übertragungsverhaltens des Rotorblattes kann dann auf die Temperaturen am außenliegenden und außenliegenden Bereich geschlossen werden.

Das thermische Übertragungsverhalten des Rotorblattes lässt sich experimentell bestimmen. So können unter Laborbedingungen (z.B. im Windkanal) definiert Versuche durchgeführt werden, in denen das Rotorblatt definiert unterschiedlichen Verläufen der Umgebungstemperatur ausgesetzt wird. Sensoren ermitteln dann die Verläufe der Temperaturen am innenliegenden und außenliegenden Bereich des Rotorblattes. Anhand der Ergebnisse dieser Experimente lässt sich also der Verlauf der Temperaturen am innenliegenden und außenliegenden Bereich anhand des Verlaufs der Umgebungstemperatur bestimmen. Dieses thermische Übertragungsverhalten kann in Datenbanken hinterlegt sein, die dann zur Ermittlung der Temperaturdifferenz herangezogen werden können.

Zusätzlich kann auch der Zustand der Bewölkung berücksichtigt werden, insbesondere ein Verlauf des Zustands der Bewölkung. Es hat sich herausgestellt, dass die Sonneneinstrahlung Teile eines Rotorblattes sehr stark erwärmen kann. Allerdings hat es sich als nachteilig herausgestellt, dass die Sonneneinstrahlung nur diejenigen Teile der Außenhülle des Rotorblattes erwärmt, die ihr zugewandt sind. Da also keine gleichmäßige Erwärmung erfolgt, erscheint ein recht inhomogenes Wärmebild von einem durch Sonnenstrahlung erwärmten Rotorblatt. Unregelmäßigkeiten im Wärmebild, welche auf Fehler und Defekte herrühren, können nicht von solchen Unregelmäßigkeiten unterschieden werden, die bedingt sind durch eine ungleichmäßige Erwärmung durch die Sonneneinstrahlung. Insofern ist es bevorzugt, wenn bei der Untersuchung eine Wettersituation vorliegt, in der zumindest in den letzten Stunden keine wesentliche Sonneneinstrahlung vorhanden war.

Die Ermittlung der Temperaturdifferenz alleine aus den Umgebungswetterdaten, insbesondere der Umgebungstemperatur, und dem Verlauf heraus, eignet sich insbesondere dann, wenn die Windkraftanlage außer Betrieb ist, da dann keine Verfälschungen auftreten, die durch den Betrieb der Windanlage hervorgerufen werden. Denn der Betrieb der Windkraftanlage erzeugt Reibungswärme an den außenliegenden Bereichen, erzeugt durch die Luftströmung.

In einer anderen bevorzugten Ausgestaltung hingegen werden die durch den Betrieb hervorgerufenen Erwärmungen gezielt genutzt, um die Temperaturdifferenz herzustellen. Beim Betrieb der Windkraftanlage erzeugt nämlich die Reibung zwischen der Luft und dem Rotorblatt eine enorme Wärme, die auf die Rotorblätter wirkt. Diese erwärmt unmittelbar und recht gleichmäßig die außenliegenden Bereiche der Rotorblätter, und zwar in einem sehr starken Maße. Es hat sich herausgestellt, dass insbesondere beim Anfahren die Temperaturdifferenz zwischen den innenliegenden Bereichen und den außenliegenden Bereichen recht stark ansteigt, da die innenliegenden Bereiche sich deutlich langsamer erwärmen als die außenliegenden Bereiche. Insofern kann in recht kurzer Zeit nach einem Anfahren der Windkraftanlage eine recht hohe Temperaturdifferenz festgestellt werden, die sich vorzüglich dazu eignet, die Rotorblätter auf mögliche Fehler zu untersuchen. Eine analoge Situation, wenn auch mit entgegengesetzten Vorzeichen, herrscht dann, wenn eine Windkraftanlage recht lang betrieben wurde und sich die Rotorblätter dann auf einem recht hohen Niveau homogen erwärmt sind, so dass die außenliegenden Bereiche eine ähnliche Temperatur haben wie die innenliegenden Bereiche. Bringt man dann die Windkraftanlage zum Stillstand, so kühlt die Umgebungsluft die außenliegenden Bereiche der Rotorblätter sehr stark ab. Die innenliegenden Bereiche kühlen zwar auch ab, allerdings deutlich langsamer. Auch hier wird dann die Temperaturdifferenz erzeugt, welche für die Untersuchung der Rotorblätter von benötigt wird. Für die Ermittlung der Verläufe der Innenliegenden und außenliegenden Bereiche lässt sich wiederum das oben beschriebene thermische Übertragungsverhalten heranziehen.

Die Temperatur am außenliegenden Bereich kann dabei durch eine berührungslose Temperaturmessmethode ermittelt werden, insbesondere durch Messmethoden, welche die abgegebene Wärmestrahlung ermitteln. Kennt man dann beispielsweise den Startzeitpunkt der Inbetriebnahme, so kann anhand der thermischen Modelle auch die Innentemperatur anhand der Außentemperatur oder anhand eines Verlaufs der Außentemperatur ermittelt werden. Für die berührungslose Messmethode können Wärmebildkameras, Infrarotkameras, berührungslose Thermometer z.B. Pyromenter verwendet werden.

Bei der berührungslosen Ermittlung der Temperatur des außenliegenden Bereichs kann die natürliche Umgebungsstrahlung berücksichtigt werden. Diese kann in Abzug gebracht werden von der Wärmestrahlung, die von dem Rotorblatt ausgeht. Durch die Berücksichtigung der Umgebungsstrahlung kann die Temperatur des außenliegenden Bereichs deutlich exakter bestimmt werden.

In einer anderen bevorzugten Ausgestaltung, die auch in Kombination zu den vorher genannten Verfahrenschritten gebracht werden kann, ist vorgesehen, dass die Temperaturdifferenz durch gezielten künstlichen Eingriff erzeugt wird. Der gezielte künstliche Eingriff kann, wie vorgenannt, durch gezieltes Anfahren und Abbremsen der Rotorblätter erzeugt werden, mithilfe der Reibungsenergie durch die Luftströmung. Alternativ oder in Kombination dazu können auch separate Heizmittel verwendet werden. Hierzu eignen sich insbesondere Heißluftgebläse, welche insbesondere die innenliegenden Bereiche der Rotorblätter gezielt erwärmen. Auch können in das Laminat des Rotorblattes Heizdrähte oder eingefügt sein, welche gezielt insbesondere die außenliegenden Bereiche erwärmen. So kann auch bei ungünstigen Wetterbedingungen eine Situation geschaffen werden, die eine Analyse der Rotorblätter ermöglicht.

Als Luftfahrzeug kommen insbesondere zulassungspflichtige Luftfahrzeuge zur Anwendung. Dies sind insbesondere solche Luftfahrzeuge mit einem Gewicht von mehr als 25kg und/oder solche Luftfahrzeuge, die in einer Höhe von mehr als 30 m über Grund fliegen. Es kommen vorwiegend Helikopter, Luftschiffe und Drohnen in Betracht.

Vorzugsweise sind die erforderlichen Einrichtungen zur Durchführung des Verfahrens in einem Luftfahrzeug integriert. Über eine Datenverbindung kann beispielsweise das Luftfahrzeug bzw. die dazugehörige Datenverarbeitungseinheit in Kontakt mit den Sensoren zur Erfassung der relevanten Umwelteinflüsse stehen. Im Betrieb kann das Luftfahrzeug selbst ermitteln, welche Windkraftanlagen derzeit oder in naher Zukunft in einem Zustand sind, welcher für die Erfassung durch die WärmebildiCamera geeignet ist. So kann während des Fluges die ToDo-Liste der abzufliegenden Windkraftanlagen erstellt oder aktualisiert werden. Die zum Luftfahrzeug zugehörige Datenverarbeitungseinheit kann aber auch örtlich entfernt sein.

Die Erfindung wird anhand der Figuren nachfolgend näher erläutert. Hierin zeigt

Figur 1    einen Hubschrauber im Einsatz an einem Windrad;

Figur 2    den Querschnitt eines

a) intakten Rotorblattes,
b) defekten Rotorblattes;

Figur 3    a) einen ersten beispielhaften durch Umwelteinflüsse bedingten Tagestemperaturverlauf an unterschiedlichen Bereichen einer Windkraftanlage,
b) einen zweiten beispielhaften durch Umwelteinflüsse bedingten Tagestemperaturverlauf an unterschiedlichen Bereichen einer Windkraftanlage.

Figur 4    einen beispielhaften durch den Betrieb der Windkraftanlage bedingten Temperaturverlauf an unterschiedlichen Bereichen einer Windkraftanlage.

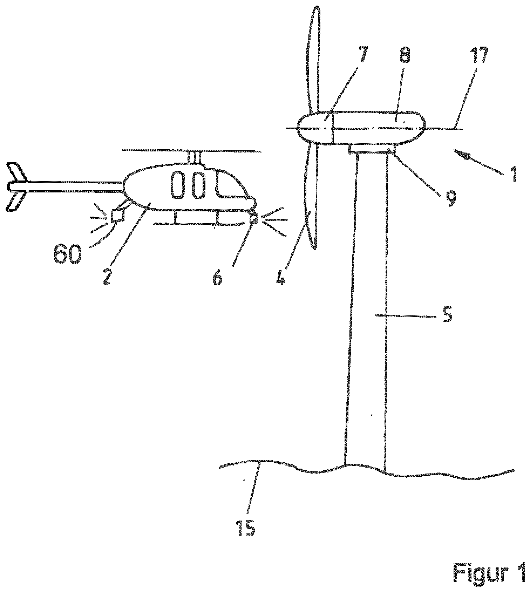

Figur 1 zeigt ein Windrad 1 als Windkraftanlage 1 in einem Gewässer, zu dessen Veranschaulichung der Wasserspiegel 15 angedeutet ist. Das Windrad 1 umfasst einen im Meeresboden und/oder schwimmend verankerten Turm 5. Mit dem Bezugszeichen 4 sind zwei um eine Horizontalachse 17 drehbare Rotorblätter gezeichnet, mit 7 die Nabe und mit 8 die so genannte Gondel, welche drehbar auf der Windrichtungsnachführung 9 angeordnet ist. Dieses Windrad 1, genauer gesagt sein Rotorblatt 4, der Turm 5 der die Gondel 8, werden in der Darstellung gemäß Figur 1 gerade von einem Hubschrauber 2 bzw. einer darauf installierten, als Kamera 6 ausgebildeten thermografischen Aufnahmeeinrichtung in Form einer Wärmebildkamera erfasst. Auch eine damit kombinierte Erfassung etwa über Terahertzwellen, 3D-Scannen oder Lasertechnik ist denkbar. Die Positionierung der Rotorblätter 4 ist dabei ebenso gleichgültig wie deren Zustand, insbesondere müssen die Rotorblätter 4 vor der hier dargestellten Erfassung auch nicht von Verunreinigungen befreit werden.

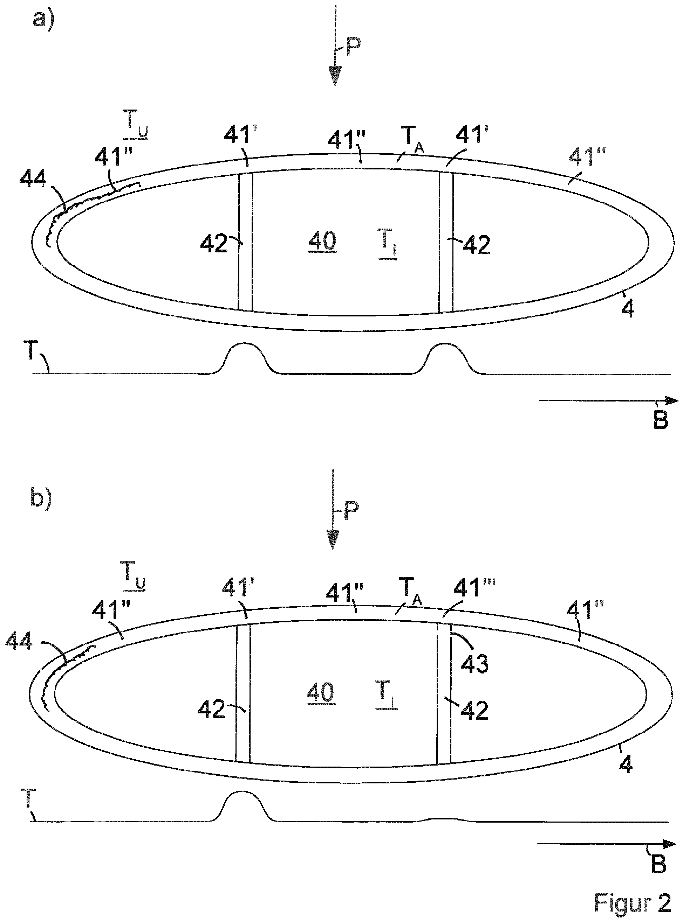

In Figur 2a ist der Querschnitt eines zu untersuchenden Rotorblattes 4 vereinfacht dargestellt. Das Rotorblatt 4 ist im Wesentlichen durch ein Hohlprofilelement gebildet, welches eine Außenwandung 41 und Verstärkungsrippen 42 im Inneren des Rotorblattes umfasst. Durch die Außenwandung 41 und die Verbindungsstege 42 werden Hohlräume 40 gebildet. Als Werkstoff für die Rotorblätter kommen insbesondere Verbundwerkstoffe zur Anwendung, beispielsweise Glasfaser- oder Kohlefaserwerkstoffe, die über eine recht geringe Wärmeleitfähigkeit verfügen. Daher kann es zu unterschiedlichen Temperaturverteilungen am Rotorblatt kommen. Außerhalb des Rotorblattes herrscht die Umgebungstemperatur $T_U$. An der Außenwandung 41 wird an Bereichen 41", welche beabstandet sind von Nahtstellen 41' zu den Verbindungsstegen 42 eine äußere Temperatur $T_A$ herrschen. Im Innenbereich der Hohlräume 40 kann eine innere Temperatur $T_I$ vorherrschen, die sich zeitweise wesentlich von der äußeren Temperatur $T_A$ sowie der Umgebungstemperatur $T_U$ unterscheiden wird. Im Bereich der Nahtstellen 41' an der Außenwandung 41, kann es zu abweichenden Temperaturen kommen gegenüber den Bereichen 41" kommen.

Eine beispielhafte Verteilung der Temperatur T an der Oberfläche der Außenwandung 41 über die Breite des Querschnittes B ist unterhalb des Querschnitts in Figur 2a dargestellt. So ist zu erkennen, dass die auf einem Wärmebild dargestellte Temperatur T auf der Oberfläche des Rotorblattes 41 unterschiedliche Beträge aufweisen. Im außenliegenden Bereich 41", welche beabstandet zu den Verbindungsstegen 42 ist, ist die Temperatur im vorliegenden Fall niedriger als an den Nahtstellen 41'. An den Nahtstellen 41' ist nämlich eine Wärmebrücke zwischen dem Innenraum 40 und der Außenwandung 41 vorhanden, so dass die Außenwandung 41 in diesem Bereich stärker erwärmt wird als an anderen Bereichen.

Dies gilt natürlich nur dann, wenn die Temperatur im Hohlraum 40 $T_I$ größer ist als die Temperatur $T_A$ im außenliegenden Bereich 41". Sollte die Temperatur $T_A$ im außenliegenden Bereich höher sein als die im Hohlraum 40, so wäre der Temperaturverlauf in etwa horizontal gespiegelt zum dargestellten Verlauf.

In Figur 2b ist der Querschnitt des Rotorblattes wiederum dargestellt, wobei ein Riss 43 im rechten Verbindungssteg 42 vorhanden ist, der stellvertretend für eine innere Beschädigung steht. Es ist ersichtlich, dass die Wärmebrücke zwischen dem Innenraum 40 und der Außenwandung 41 unterbrochen oder zumindest verkleinert ist. Dies ist eindeutig an dem geänderten Temperaturverlauf des Wärmebildes zu erkennen. Der Temperaturausschlag an der rechten Nahtstelle 41" ist nun deutlich verringert. Alternativ kann er auch vollständig fehlen. Allein aufgrund des Wärmebildes kann somit auf einen Defekt im Inneren des Rotorblattes geschlossen werden.

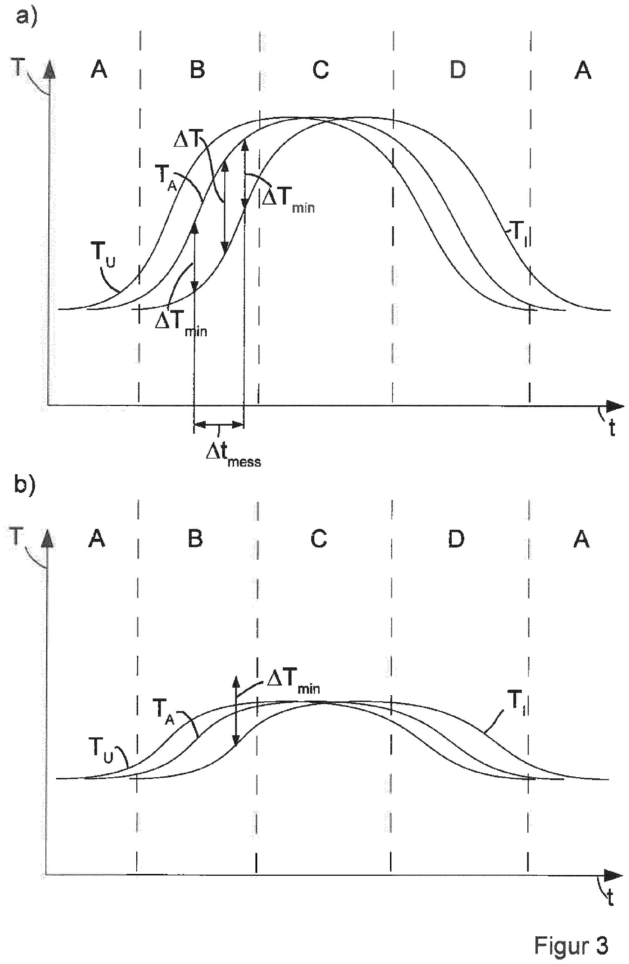

Das vorliegende Verfahren ist aber nur dann einsetzbar, wenn die Differenzen der Temperaturen $T_I$ und $T_A$ zwischen dem innenliegenden Bereich und außenliegenden Bereich einen gewissen Mindestwert $\Delta T_{min}$ aufweist. In Figur 3a ist beispielhaft ein Temperaturverlauf über unterschiedliche Tageszeiten dargestellt. Der Abschnitt A ist stellvertretend für die Nacht, der Abschnitt B stellvertretend für die Morgenstunden, der Abschnitt C stellvertretend für die Mittagsstunden und der Abschnitt D stellvertretend für die Abendstunden dargestellt. Wenn nachts die Umgebungstemperatur $T_U$ relativ gering ist, so steigt sie üblicherweise mit Beginn des Tages stetig an, bis sie zur Mittagszeit ihren Höchstwert erreicht. In den Abendstunden sinkt die Umgebungstemperatur $T_U$ dann ab, so dass sie nachts wiederum ihren Tiefstpunkt erreicht. Die Temperatur $T_A$ am außenliegenden Bereich 41" folgt in der Regel diesem Temperaturverlauf mit einer Verzögerung von einigen Minuten bis einigen Stunden. Auch kann extreme Sonneneinstrahlung Einfluss auf dem Nachlauf der Temperatur $T_A$ haben, wobei eine hohe Sonneneinstrahlung die Erhitzung der Außenwandung deutlich beschleunigt. Die Temperatur $T_I$ im innenliegenden Bereich 40 des Rotorblattes läuft noch langsamer hinterher. So können sich dann wetterabhängig doch deutliche Temperaturdifferenzen $\Delta T$ zwischen innerer Temperatur $T_I$ und äußerer Temperatur $T_A$ ergeben, insbesondere wenn die Außenwandung bereits deutlich erwärmt ist. Eine entsprechende Temperaturdifferenz $\Delta T$ kann natürlich auch auftreten, wenn abends aufgrund der sinkenden Umgebungstemperatur $T_U$ die äußere Temperatur $T_A$ schneller abfällt als die innere Temperatur $T_I$.

In Figur 3b ist ein alternativer Temperaturverlauf gezeigt, wobei die Schwankungen der Umgebungstemperatur derart gering sind, dass die Änderung der Umgebungstemperatur $T_U$ nicht dazu ausreichen, solche Temperaturunterschiede $\Delta T$ am Rotorblatt zu erzeugen, dass anhand des Wärmebilds aussagekräftige Informationen über den Inneren Zustand der Rotorblätter hergeleitet werden können. Dies ist insbesondere dann gegeben, wenn die Schwankungen der Außentemperatur $T_U$ in einem Tag geringer sind als die erforderliche Mindesttemperaturdifferenz $\Delta T_{min}$ zwischen dem innenliegenden Bereich 40 und den außenliegenden Bereich 41".

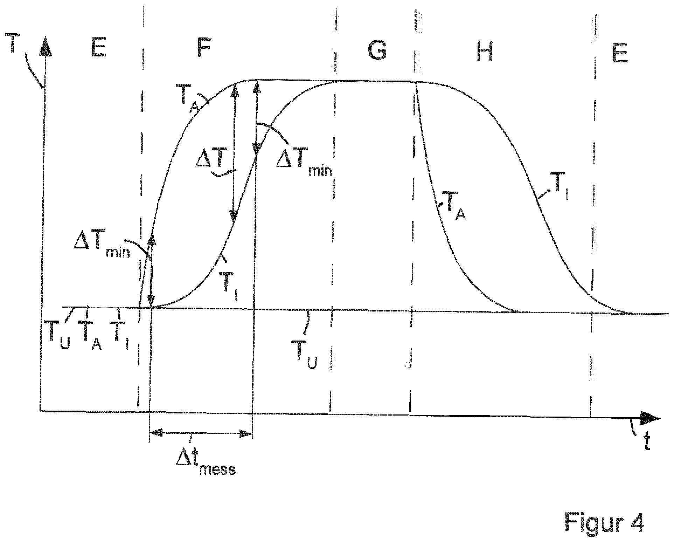

Anhand von Figur 4 wird ein Temperaturverlauf gezeigt der sich durch den Betrieb der Windkraftanlage ergibt. Gezeigt ist die Umgebungstemperatur $T_U$, die über den gesamten Betrachtungszeitraum im Wesentlichen als unverändert angenommen wird. Im Abschnitt E wird angenommen, dass die Windkraftanlage angehalten ist. Die Temperatur des außenliegenden Bereichs $T_A$ und die Temperatur des innenliegenden Bereichs $T_I$ sind zu diesem Zeitpunkt angeglichen an die Umgebungstemperatur $T_U$ und stimmen im Wesentlichen miteinander überein. Dies gilt insbesondere dann, wenn keine Sonneneinstrahlung vorhanden ist, die lokale Bereiche des Rotorblattes erwärmt. Mit Beginn des Abschnitts F wird nun die Windkraftanlage im Betrieb genommen. Die Rotorblätter 4 beginnen sich zu drehen. Aufgrund der Reibung zwischen der Luft und dem Rotorblatt werden die außenliegenden Bereiche der Rotorblätter zügig erwärmt. Die Temperaturkurve der Temperatur $T_A$ am außenliegenden Bereich steigt schlagartig an, bis sie in etwa bei Erreichen der Mitte des Abschnitts D einen Maximalwert annimmt, der dann während des weiteren Betriebs auch aufrechterhalten wird. Die Umgebungstemperatur $T_U$ ändert sich nicht. Die Temperatur $T_I$ am innenliegenden Bereich folgt der Temperatur $T_A$ am außenliegenden Bereich und steigt ebenfalls an, bis diese zu Beginn des Abschnitts G den selben Wert annimmt, wie die Temperatur $T_A$ am außenliegenden Bereiche. Durch das sehr schnelle Erwärmen des außenliegenden Bereich und das doch deutliche verzögerte Erwärmen des innenliegenden Bereichs ergibt sich recht schnell nach Beginn des Betriebes eine Temperaturdifferenz $\Delta T$ größer oder gleich des Mindestwertes $\Delta T_{min}$. Der Messzeitraum, zu dem die Untersuchungen sinnvoll durchgeführt werden, wird also recht schnell erreicht nach Anfahren der Windkraftanlage. Erst wenn die Temperatur $T_I$ am innenliegenden Bereich sich nahe an dem Maximalwert der Temperatur $T_A$ am außenliegenden Bereich annähert kurz vor Abschnitt G, endet der Messzeitraum $\Delta T$, da dann die die Temperaturdifferenz aus $T_I$ und $T_A$ kleiner ist die als die minimale Temperaturdifferenz.

Im Abschnitt G ist die Temperaturdifferenz wiederum so gering, dass keine sinnvolle Untersuchung mehr möglich ist. Erst mit Beginn des Anhaltens des Windkraftrades ergibt sich wieder ein weiterer Messzeitraum. Zu Beginn des Abschnitts H wird das Rotorblatt A angehalten. Die Temperatur am außenliegenden Bereich wird schlagartig durch die Umgebungstemperatur $T_U$ abgekühlt. Das Abkühlen der innenliegenden Bereiche erfolgt deutlich langsamer, so dass sich auch hier wiederum die Temperaturdifferenzen ergeben.

Einen ähnlichen Temperaturverlauf wie in Figur 4 gezeigt kann sich auch dann ergeben, wenn die Erwärmung eines der Bereiche durch zusätzliche Heizmittel erfolgt. Die Heizmittel können beispielsweise ein Heißluftgebläse sein, welche den innenliegenden Bereich mit Warmluft versorgen und dabei gezielt die innenliegenden Bereiche erwärmen und so die Temperatur am innenliegenden Bereich $T_I$ erhöhen. Es können auch am außenliegenden Bereich Heizdrähte vorhanden sein, die so die außenliegenden Bereiche definiert erwärmen.Beide Maßnahmen sind dazu geeignet, die Temperaturdifferenz zwischen innenliegendem und außenliegendem Bereich künstlich zu erzeugen, was auch die Erhaltung einer bereits vorhandenen Temperaturdifferenz mit umfasst. Der Temperaturverlauf kann dann im Wesentlichen so ausgestaltet sein, wie in Figur 4 gezeigt. Eventuell können die Verläufe der Temperaturen $T_I$ und $T_A$ vertauscht sein, z.B. dann, wenn der innenliegende Bereich erwärmt wird durch gezielten Einsatz von Heizelementen und dann die Temperatur des außenliegenden Bereichs der Temperatur des innenliegenden Bereichs hinterher läuft. Beispielhaft sind Heizdrähte 44 in Figur 2 in der Außenwand des Rotorblattes 4 angedeutet. Solche Heizdrähte können in der gesamten Außenwand eingebracht sein.

Die Temperatur $T_A$ am außenliegenden Bereich kann insbesondere besonders berührungslos ermittelt werden. Hierzu eignen sich thermografische Verfahren, die insbesondere die Infrarottechnik umfassen. Solche Verfahren messen die von den Rotorblättern ausgesendeten Infrarotstrahlen. Jedoch umfassen die von den Rotorblättern ausgesendeten Strahlen auch Reflexionen von Strahlen, die in der Atmosphäre vorhanden sind und auf die Rotorblätter auftreffen. In einer bevorzugten Weiterbildung werden diese Reflexionen herausgerechnet. Dafür ist es allerdings vorteilhaft, wenn die Reflexionen auch zunächst ermittelt werden. Dafür kann ein weiterer Sensor vorgesehen sein, der in Figur 1 mit dem Bezugszeichen 60 versehen ist, und im Wesentlichen entgegengesetzt zur thermographischen Aufnahmeeinrichtung 6 ausgerichtet ist. Die Strahlung, die von dem Sensor 60 aufgenommen wird, wird von den Strahlen abgezogen, die von dem Sensor 6 aufgenommen werden, der die Abstrahlung der Rotorblätter aufnimmt. So kann die Temperatur $T_A$ genauer ermittelt werden, auch wenn der gemessene Temperaturwert $T_A$ des außenliegenden Bereiches durch Reflektionen in der Atmosphäre oder am Wasser verfälscht werden könnte. Die Reflektion wird dann einfach ausgerechnet, da sie durch den Sensor 60 ermittelt wird und damit bekannt ist.

Ist nun die Temperatur des außenliegenden Bereichs bekannt, so ist es für die Ermittlung des Messzeitraums von Bedeutung, wie hoch die Temperatur am innenliegenden Bereich ist oder sein wird. Am Übergang des Abschnitts E zum Abschnitt F sind die Temperaturen $T_A$, $T_i$, $T_U$ identisch. Über die thermographische Aufnahmeeinrichtung lässt sich nun berührungslos zu irgendeinem Zeitpunkt im Abschnitt F die Temperatur $T_A$ ermitteln. Über ein thermisches Modell des Rotorblattes lässt sich dann auf die Temperatur $T_I$ am innenliegenden Bereich des Rotorblattes schließen, ohne dass es da zu einer unmittelbaren Messung der Temperatur dort bedarf. Das thermische Modell berücksichtigt dann die Wärmeleitfähigkeit der Strukturen und Materialien im Rotorblatt. Das thermische Modell kann durch Versuche ermittelt werden und dann in einer Datenbank hinterlegt werden. Aus einem speziellen Verlauf der Temperatur des außenliegenden Bereichs und einem gegebenen Startwert der Temperatur $T_i$ des innenliegenden Bereichs, beispielsweise des Temperaturwertes $T_I$ (beim Übergang von Abschnitt E auf Abschnitt F) kann dann auf die innenliegende Temperatur zu einem beliebigen Zeitpunkt in den Abschnitten F, G, H und E geschlossen werden. Ein recht einfaches thermisches Modell kann durch folgende Gleichung beschrieben werden:

$$\Delta Q = \lambda/d \times A \times (T_A - T_I)$$

mit

$\Delta Q$: Wärmestrom

d: Dicke eine Bereichs des Rotroblattes, z.B. eines Verbindungssteges

A: Querschnitt des wärmeleitenden Abschnitts

**Patentansprüche**

1. Verfahren zur Überprüfung des baulichen Zustands von Windkraftanlagen (1) in Form von mehrere Rotorblätter (4) aufweisenden Windrädern, wobei Teile der Windkraftanlagen von einer oder mehreren installierten thermografischen Aufnahmeeinrichtungen (6) erfasst und die dabei ermittelten Messwerte im Hinblick auf etwaige Beschädigungen ausgewertet werden, wozu in einem ersten Verfahrensschritt ein Messzeitraum ($\Delta t_{mess}$) ermittelt wird, zu dem eine Temperaturdifferenz ($\Delta T$) zwischen einem innenliegenden Bereich (40) der Windkraftanlage, insbesondere innerhalb einer Hohlkammer (40), und einem daran benachbarten außenliegenden Bereich der Windkraftanlage (41"), insbesondere an einer Außenwandung (41), aufgrund von Umwelteinflüssen ($T_U$) einen Mindestwert ($\Delta T_{min}$) annehmen wird,
**dadurch gekennzeichnet,**
**dass** in dem ersten Verfahrensschritt ein Verlauf der Umgebungstemperatur ($T_U$) im Bereich einer Windkraftanlage analysiert wird, anhand dessen die Temperaturdifferenz ($\Delta T$) für einen Zeitpunkt in der Zukunft ermittelt wird, und eine momentane Temperatur ($T_A$) am außenliegenden Bereich (41) des Rotorblattes (4) ermittelt wird und dass anhand eines thermischen Modells des Rotorblattes (4) oder eines Teils davon die derzeitige Temperatur ($T_i$) am innenliegenden Bereich des Rotorblattes (40) berechnet wird, wobei das thermische Modell die Wärmeleitfähigkeit der Strukturen und Materialien im Rotorblatt berücksichtigt,
und **dass** in einem zweiten Verfahrensschritt ein Luftfahrzeug (2), an dem die eine oder mehrere thermografische Aufnahmeeinrichtungen (6) installiert sind, während dieses Messzeitraums ($\Delta t_{mess}$) in eine Position gebracht wird, in welcher die Windkraftanlage in den Erfassungsbereich der installierten thermografischen Aufnahmeeinrichtungen (6) gelangt, und dass in einem dritten Verfahrensschritt die Windkraftanlage (1) von der thermografischen Aufnahmeeinrichtung (6) während dieses Messzeitraums ($\Delta t_{mess}$) erfasst wird.

2. Verfahren nach dem vorherigen Anspruch,
**dadurch gekennzeichnet,**
**dass** Umwelteinflüsse ($T_U$) von Sensoren ermittelt werden und als Umwelteinflusswerte einer Datenverarbeitungseinheit zugeführt werden, und dass die Datenverarbeitungseinheit unter Berücksichtigung der Umwelteinflusswerte den Messzeitraum ($\Delta t_{mess}$) ermittelt.

3. Verfahren nach einem der vorherigen Ansprüche,
**dadurch gekennzeichnet,**
**dass** anhand von Temperatursensoren die aktuellen Temperaturen ($T_I$, $T_A$) am innenliegenden Bereich und am angrenzenden außenliegenden Bereich ermittelt werden,
und **dass** anhand der aktuellen Temperaturen ($T_I$, $T_A$) und insbesondere unter Berücksichtigung der aktuellen Umgebungstemperatur ($T_U$) der Messzeitraum ($\Delta t_{mess}$) ermittelt wird.

4. Verfahren nach einem der vorherigen Ansprüche,
**dadurch gekennzeichnet,**
**dass** anhand von Temperaturverläufen, insbesondere von Verläufen der Umgebungstemperatur ($T_U$) und der Temperaturen ($T_I$, $T_A$) der innen- und außenliegenden Bereiche (40, 41"), der vorangegangenen 6 bis 12 Stunden eine Extrapolation der Temperaturen ($T_I$, $T_A$) der innenliegenden und außenliegenden Bereiche (40, 41") in die Zukunft vorgenommen wird, und dass anhand dieser Extrapolation der in der Zukunft liegende Messzeitraum ($\Delta t_{mess}$) ermittelt wird.

5. Verfahren nach Anspruch 1,
**dadurch gekennzeichnet,**
**dass** der Verlauf der Umgebungstemperatur ($T_U$) sowohl historische Umgebungstemperaturen ($T_U$) als auch Prognosen der Umgebungstemperatur ($T_U$) für die Zukunft umfasst.

6. Verfahren nach einem der Ansprüche 1 oder 5,
**dadurch gekennzeichnet,**
**dass** zusätzlich zum Verlauf der Umgebungstemperatur ($T_U$) der Zustand der Bewölkung berücksichtigt wird, insbesondere ein Verlauf des Zustands der Bewölkung.

7. Verfahren nach einem der vorherigen Ansprüche,
**dadurch gekennzeichnet,**
**dass** die durch den Betrieb erzeugte Erwärmung bei der Ermittlung der Temperaturdifferenz berücksichtigt wird.

8. Verfahren nach Anspruch 1,
**dadurch gekennzeichnet,**

**dass** die momentane Temperatur ($T_A$) des außenliegenden Bereichs (41) berührungslos ermittelt wird, insbesondere mittels einer Infrarotkamera oder eines berührungslosen Thermometers, und dass vorzugsweise bei der berührungslosen Ermittlung die natürliche Umgebungsstrahlung mitberücksichtigt wird.

9. Verfahren nach einem der vorherigen Ansprüche,
   **dadurch gekennzeichnet,**
   **dass** die Temperaturdifferenz ($\Delta T$) durch gezielten künstlichen Eingriff erzeugt wird.

10. Verfahren nach einem der vorherigen Ansprüche,
    **dadurch gekennzeichnet,**
    die Temperaturdifferenz ($\Delta T$) durch gezieltes Anfahren und Anhalten der Rotorblätter (4) künstlich erzeugt wird.

11. Verfahren nach einem der vorherigen Ansprüche,
    **dadurch gekennzeichnet,**
    **dass** die Temperaturdifferenz ($\Delta T$) durch gezielten Einsatz von Heizelementen (44) künstlich erzeugt wird.

12. Luftfahrzeug, umfassend eine thermografische Aufnahmeeinrichtung (6) zur Erfassung von Teilen von Windkraftanlagen, und umfassend ferner eine Datenverarbeitungseinrichtung, welche in Datenverbindung mit Sensoren zur Erfassung von Umwelteinflüssen steht, wobei die durch die Sensoren erfassbaren Umwelteinflüsse unmittelbare Auswirkungen auf das thermische Gefüge innerhalb der zu erfassenden Teile der Windkraftanlage haben, wobei das Luftfahrzeug ein Verfahren nach einem der vorherigen Ansprüche ausführt.

## Claims

1. Method for checking the structural condition of wind power plants (1) in the form of wind turbines having a plurality of rotor blades (4), parts of the wind power plants being captured by one or more installed thermographic recording devices (6) and the measured values determined in the process being evaluated with regard to any damage, for which purpose a measurement period ($\Delta t_{mess}$) is determined in a first method step, during which period a temperature difference ($\Delta T$) between an internal region (40) of the wind power plant, in particular inside a hollow chamber (40), and an adjacent external region of the wind power plant (41"), in particular on an outer wall (41), will assume a minimum value ($\Delta T_{min}$) on account of environmental influences ($T_U$),
   **characterized**
   **in that**, in the first method step, a profile of the ambient temperature ($T_U$) in the region of a wind power plant is analysed and is used to determine the temperature difference ($\Delta T$) for a time in the future, and an instantaneous temperature ($T_A$) in the external region (41) of the rotor blade (4) is determined, and in that the current temperature ($T_I$) in the internal region of the rotor blade (40) is calculated on the basis of a thermal model of the rotor blade (4) or of a part thereof, the thermal model taking into account the thermal conductivity of the structures and materials in the rotor blade,
   and **in that**, in a second method step, an aircraft (2) on which the one or more thermographic recording devices (6) are installed is changed, during this measurement period ($\Delta t_{mess}$), to a position in which the wind power plant enters the capturing range of the installed thermographic recording devices (6),
   and **in that**, in a third method step, the wind power plant (1) is captured by the thermographic recording device (6) during this measurement period ($\Delta t_{mess}$).

2. Method according to the preceding claim,
   **characterized**
   **in that** environmental influences ($T_U$) are determined by sensors and are supplied, as environmental influence values, to a data processing unit, and in that the data processing unit determines the measurement period ($\Delta t_{mess}$) taking into account the environmental influence values.

3. Method according to one of the preceding claims,
   **characterized**
   **in that** the current temperatures ($T_I$, $T_A$) in the internal region and in the adjoining external region are determined on the basis of temperature sensors, and **in that** the measurement period ($\Delta t_{mess}$) is determined on the basis of the current temperatures ($T_i$, $T_A$) and, in particular, taking into account the current ambient temperature ($T_U$).

4. Method according to one of the preceding claims,
   **characterized**
   **in that** the temperatures ($T_i$, $T_A$) of the internal and external regions (40, 41") are extrapolated into the future on the basis of temperature profiles, in particular profiles of the ambient temperature ($T_U$) and the temperatures ($T_I$, $T_A$) of the internal and external regions (40, 41") from the previous 6 to 12 hours, and in that the measurement period ($\Delta t_{mess}$) in the future is determined on the basis of this extrapolation.

5. Method according to Claim 1,
   **characterized**
   **in that** the profile of the ambient temperature ($T_U$) comprises both historical ambient temperatures ($T_U$) and forecasts of the ambient temperature ($T_U$) for the future.

6. Method according to either of Claims 1 and 5,

**characterized**

**in that** the state of the clouds, in particular a profile of the state of the clouds, is taken into account in addition to the profile of the ambient temperature ($T_U$).

7. Method according to one of the preceding claims, **characterized**

   **in that** the heating produced by operation is taken into account when determining the temperature difference.

8. Method according to Claim 1, **characterized**

   **in that** the instantaneous temperature ($T_A$) of the external region (41) is contactlessly determined, in particular by means of an infrared camera or a contactless thermometer, and in that the natural ambient radiation is preferably concomitantly taken into account during the contactless determination.

9. Method according to one of the preceding claims, **characterized**

   **in that** the temperature difference ($\Delta T$) is produced by means of targeted artificial intervention.

10. Method according to one of the preceding claims, **characterized**

    **in that** the temperature difference ($\Delta T$) is artificially produced by starting and stopping the rotor blades (4) in a targeted manner.

11. Method according to one of the preceding claims, **characterized**

    **in that** the temperature difference ($\Delta T$) is artificially produced by the targeted use of heating elements (44).

12. Aircraft comprising a thermographic recording device (6) for capturing parts of wind power plants and also comprising a data processing device which has a data connection to sensors for capturing environmental influences, the environmental influences which can be captured by the sensors having immediate effects on the thermal structure inside the parts of the wind power plant to be captured, the aircraft carrying out a method according to one of the preceding claims.

**Revendications**

1. Procédé servant à surveiller l'état de construction d'éoliennes (1) sous la forme de roues éoliennes présentant plusieurs pales de rotor (4), dans lequel des parties des éoliennes sont détectées par un ou plusieurs dispositifs d'enregistrement (6) thermographiques installés et les valeurs de mesure déterminées dans ce cadre sont évaluées au regard d'éventuels dommages, pour quoi on détermine lors d'une première étape de procédé une période de mesure ($\Delta t_{mesure}$), lors de laquelle une différence de température ($\Delta T$) entre une zone située à l'intérieur (40) de l'éolienne, en particulier à l'intérieur d'une chambre creuse (40), et une zone située à l'extérieur de l'éolienne (41") adjacente à la zone située à l'intérieur, en particulier au niveau d'une paroi extérieure (41), adoptera une valeur minimale ($\Delta T_{min}$) du fait d'influences extérieures ($T_U$),

   **caractérisé en ce que** lors de la première étape de procédé, une évolution de la température extérieure ($T_U$) est analysée dans la zone d'une éolienne, à l'aide de laquelle la différence de température ($\Delta T$) est déterminée dans le futur pour un moment donné, et une température ($T_A$) actuelle est déterminée au niveau de la zone située à l'extérieur (41) de la pale de rotor (4), et que la température ($T_I$) courante au niveau de la zone située à l'intérieur de la pale de rotor (40) est calculée à l'aide d'un modèle thermique de la pale de rotor (4) ou d'une partie de ce dernier, dans lequel le modèle thermique tient compte de la conductivité thermique des structures et matériaux dans la pale de rotor,

   et que lors d'une deuxième étape de procédé, un aéronef (2), sur lequel un ou plusieurs dispositifs d'enregistrement (6) thermographiques sont installés, est amené au cours de ladite période de mesure ($\Delta t_{mesure}$) dans une position, dans laquelle l'éolienne parvient dans la zone de détection des dispositifs d'enregistrement (6) thermographiques installés,

   et que lors d'une troisième étape de procédé, l'éolienne (1) est détectée par le dispositif d'enregistrement (6) thermographique au cours de ladite période de mesure ($\Delta t_{mesure}$).

2. Procédé selon la revendication précédente, **caractérisé en ce que** des influences extérieures ($T_U$) sont déterminées par des capteurs et sont amenées en tant que valeurs d'influence extérieure à une unité de traitement de données, et que l'unité de traitement de données détermine, en tenant compte des valeurs d'influence extérieure, la période de mesure ($\Delta t_{mesure}$).

3. Procédé selon l'une quelconque des revendications précédentes, **caractérisé en ce que** les températures ($T_I$, $T_A$) instantanées sont déterminées au niveau de la zone située à l'intérieur et au niveau de la zone située à l'extérieur à l'aide de capteurs de température, et que la période de mesure ($\Delta t_{mesure}$) est déterminée à l'aide des températures instantanées ($T_I$, $T_A$) et en particulier en tenant compte de la température extérieure ($T_U$) instantanée.

4. Procédé selon l'une quelconque des revendications précédentes,
**caractérisé en ce qu'**une extrapolation des températures ($T_I$, $T_A$) des zones situées à l'intérieur et à l'extérieur (40, 41 ") dans le futur est mise en oeuvre à l'aide des variations de température, en particulier de variations de la température extérieure ($T_U$) et des températures ($T_I$, $T_A$) des zones situées à l'extérieur et à l'intérieur (40, 41"), des 6 à 12 heures précédentes, et que la période de mesure ($\Delta t_{mesure}$) située dans le futur est déterminée à l'aide de ladite extrapolation.

5.   Procédé selon la revendication 1, **caractérisé en ce que** la variation de la température extérieure ($T_U$) comprend à la fois des températures extérieures ($T_U$) historiques et des pronostics de la température extérieure ($T_U$) dans le futur.

6.   Procédé selon la revendication 1 ou 5, **caractérisé en ce que** l'état de la nébulosité, en particulier une variation de l'état de la nébulosité, est pris en compte en plus de la variation de la température extérieure ($T_U$).

7.   Procédé selon l'une quelconque des revendications précédentes,
**caractérisé en ce que** le réchauffement produit par le fonctionnement est pris en compte lors de la détermination de la différence de température.

8.   Procédé selon la revendication 1, **caractérisé en ce que** la température ($T_A$) actuelle de la zone située à l'extérieur (41) est déterminée sans contact, en particulier au moyen d'une caméra infrarouge ou d'un thermomètre sans contact, et que de préférence le rayonnement extérieur naturel est également pris en compte lors de la détermination sans contact.

9.   Procédé selon l'une quelconque des revendications précédentes,
**caractérisé en ce que** la différence de température ($\Delta T$) est produite par une intervention artificielle ciblée.

10.   Procédé selon l'une quelconque des revendications précédentes,
**caractérisé en ce que** la différence de température ($\Delta T$) est produite de manière artificielle par un démarrage et un arrêt ciblés des pales de rotor (4).

11.   Procédé selon l'une quelconque des revendications précédentes,
**caractérisé en ce que** la différence de température ($\Delta T$) est produite de manière artificielle par l'emploi ciblé d'éléments de chauffage (44).

12.   Aéronef comprenant un dispositif d'enregistrement (6) thermographique servant à détecter des parties d'éoliennes, et comprenant en outre un dispositif de traitement de données, qui est en communication par une liaison de données avec des capteurs servant à détecter des influences extérieures, dans lequel les influences extérieures pouvant être détectées par les capteurs ont des répercussions directes sur la structure thermique à l'intérieur des parties à détecter de l'éolienne, dans lequel l'aéronef exécute un procédé selon l'une quelconque des revendications précédentes.

EP 2 631 476 B1

Figur 1

11

Figur 2

Figur 3

Figur 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2011113402 A1